# EUROPEAN PATENT SPECIFICATION

(11) **EP 0 561 399 B1**
(45) Date of publication and mention of the grant of the patent: **30.06.1999**
(21) Application number: 93104464.8
(22) Date of filing: 18.03.1993
(51) Int. Cl.: H04N 11/00, H04N 7/00

(54) **Device for detecting a movement of an image from an EDTV signal with a raised precision**
Gerät zur Bildbewegungsfeststellung eines EDTV-Signals mit erhöhter Genauigkeit
Dispositif de détection de mouvement dans une image d'un signal de télévision à définition étendue, avec une précision améliorée

(30) Priority: 19.03.1992 JP 6270492
(43) Date of publication of application: 22.09.1993
(73) Proprietor: NEC CORPORATION, Tokyo (JP)
(72) Inventor: Ashibe, Minoru, c/o NEC Corporation, Tokyo (JP)
(74) Representative: VOSSIUS & PARTNER

(56) References cited:
- EP-A- 0 395 378
- WO-A-91/07847
- PATENT ABSTRACTS OF JAPAN vol. 14, no. 433 (E-979) 17 September 1990 & JP-A-02 166 983 ( NIPPON HOSO KYOKAI (NHK) ) 27 June 1990

## Description

This invention relates to a movement detecting device for use in a television receiver in detecting an eventual movement of a moving part of an image reproduced from a television signal.

A standard television signal comprises a main signal. When the television signal is a monochrome (or black-and-white) television signal, the main signal is only a luminance signal representative of successive pictures, each as the image. In other words, the main signal is displayed as the successive pictures in the television receiver. When the television signal is a color television signal, the main signal comprises not only the luminance signal but also a color or chrominance signal.

It is a recent trend that an extended definition television (EDTV) is researched and developed in order to improve picture quality of the standard television. In the extended definition television, use is made of an extended definition television signal which has not only the main signal but also an auxiliary signal. As is known in the art, the auxiliary signal has a high frequency component of the luminance signal so that the pictures are reproduced with an increased resolution.

On detecting an eventual movement from the extended definition television signal in a conventional movement detecting device, attention has not been directed to the auxiliary signal but directed only to the main signal. That is, the conventional movement detecting devide has only one movement detecting circuit, which may be called a main movement detecting circuit and is for detecting a main movement of the moving part from the main signal to produce a main movement signal representative of the main movement. The main movement signal is for use as an eventual movement signal representative of an eventual movement.

As will later be described more in detail, the conventional movement detecting device can not detect the movement with a raised precision because the conventional movement detecting device makes only use of the main signal in order to detect the eventual movement. From patent abstracts of Japan volume 14, No. 433(E-979) and JP-A-2166983 a motion detecting system is known. This system is arranged in the transmission side in order to limit the band of the transmitting signal and to thereby prevent the degradation of the received picture due to the mismatching of transmission and reception of the motion detection. Detection circuits execute the motion detection of a picture for the divided bands into which the frequency band of an input video signal is divided by filters. Based on the decision which is decided by a logical deciding circuit in reponse to output signals of the detection circuit the band of a transmitting signal is limited. By subjecting the transmitting signal to the band limitation in accordance with the decision of the logical deciding circuit the generation of the degradation in the received picture can be eliminated when the objective frequency's band of the motion detection of the transmission side is different from that of the reception side.

In EP 0 395 378 A3 a television signal processor comprising means for motion compensation has been described. In particular, a first motion detection circuit receives a main signal and outputs a main signal motion detection signal. Further, a second motion detection circuit receives a multiplex signal and outputs a multiplex signal motion detection signal. Both signals are then processed to obtain a third motion detection signal. The motion detection signals provide the motion information of each image element and are used for scan conversion to perform different processings according to the moving amount of the images.

It is therefore an object of this invention to provide a movement detecting device for detecting the movement of a moving part of an image reproduced from an extended definition television (EDTV) signal with a raised precision.

Other objects of this invention will become clear as the description proceeds.

On describing the gist of this invention, it is possible to understand that a movement detecting device for detecting a movement of a moving part of an image reproduced from a television signal comprising a main signal. The main signal comprises a luminance signal representative of successive pictures, each as the image. The device includes a main movement detecting circuit for detecting a main movement of the moving part from the main signal to produce a main movement signal representative of the main movement.

The above-understood movement detecting device is characterised by: a combining circuit for combining the main signal and an auxiliary signal of the television signal into a combined signal, the auxiliary signal comprising a high frequency component of the luminance signal so that the pictures are reproduced with an increased resolution; an overall movement detecting circuit for detecting an overall movement of the moving part from the combined signal to produce an overall movement signal representative of the overall movement; and a mixing circuit for mixing the main movement and the overall movement signals into a movement signal representative of the movement.

In the movement detection system according to the this aspect of this invention, the movement is detected by using the main movement signal detected from the main signal and additionally the overall movement signal detected from the combined signal of the main signal and the auxiliary signal. According to this invention, a misdetection of the movement signal can be avoided even when the auxiliary signal, for example, is transmitted with its amplitude reduced and with a deteriorated S/N ratio given to the combined signal of the main signal and the auxiliary signal. It is possible to reduce occurrence of the misdetection by ordinarily using the main movement signal detected from the main signal and by deciding as a moving part, irrespective of the value of the movement signal detected from the main signal, a part which is decided clearly moving from the overall movement signal detected from, for example, the combined signal. Detection of the movement is given a raised precision by correcting the main movement signal detected from the main signal by the use of the overall movement signal detected in the manner exemplified from the combined signal.

### Brief Description of the Drawing:

Fig. 1 is a block diagram of a main movement detecting circuit which is for use as a conventional movement detecting device and as a movement detecting device according to this invention;
Fig. 2 is a graph for use in describing operation of a decision circuit included in the main movement detecting circuit illustrated in Fig. 1;
Fig. 3 is a diagram for use in describing a television signal according to an interlace scan;
Fig. 4 is a block diagram of a movement detecting device;
Fig. 5 is a diagram of a transmission format of an extended definition television (EDTV) signal;
Fig. 6 is a block diagram of a further movement detecting device; and
Fig. 7 is a block diagram of a movement detecting device according to an embodiment of this invention.

### Description of the Preferred Embodiments:

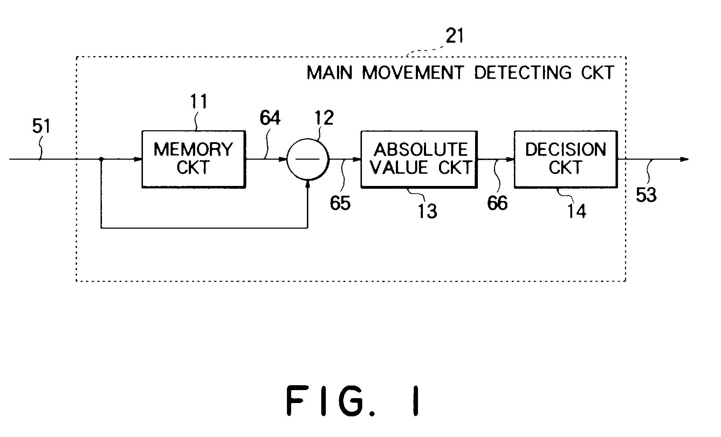

Referring to Fig. 1, description will first be made as regards a conventional movement detecting device which is equivalent to that described hereinabove. The conventional movement detecting device is for detecting a movement of a moving part of an image reproduced from an extended definition television (EDTV) signal and only has a main movement detecting circuit 21 as described above. The main movement detecting circuit 21 detects a main movement of the moving part from a main signal 51 of the extended definition television signal and produces a main movement signal 53 representative of the main movement. The main signal 51 has a luminance signal representative of successive pictures, each as the image. In the conventional movement detecting device, the main movement signal 53 is used as a movement signal representative of the movement as it is.

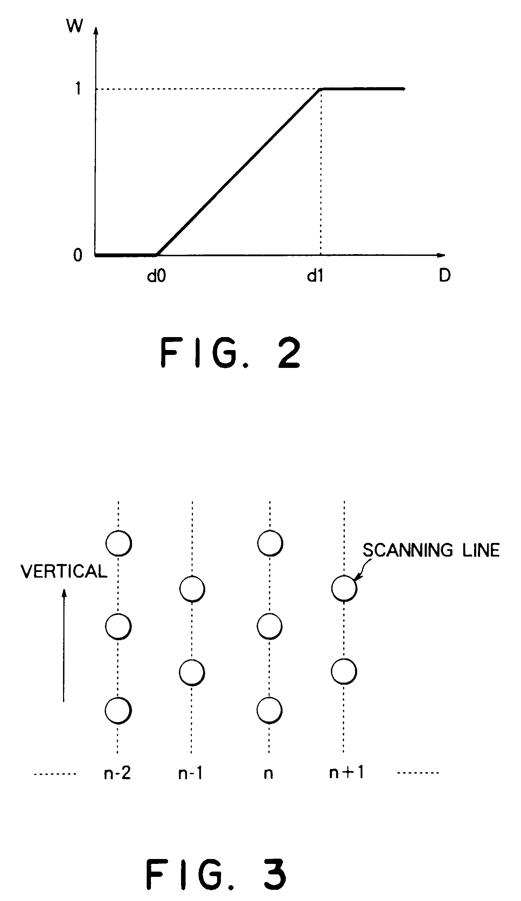

The main movement detecting circuit 21 is in current use in an extended definition television receiver, such as a "Clear Vision" receiver, in detecting the movement. The main movement detecting circuit 21 has a memory circuit 11 supplied with the extended definition television signal 51 with interlaced scanning. To the extended definition television signal 51 supplied with interlaced scanning, the memory circuit 11 gives a delay of one frame period to produce a one-frame delayed signal 64. A subtracter 12 produces a difference signal 65 representative of a difference between the main signal 51 and the delayed signal 64. An absolute value circuit 13 calculates an absolute value of the difference signal 65 as an absolute value signal 66. The signal 66 is subjected, by a decision circuit 14 into the main movement signal 53, to a conversion exemplified in Fig. 2.

In Fig. 2, D represents a value of the absolute value signal 66. W represents a value of the signal 53. When D is equal to or less than d0, W is decided as 0, namely, to represent a standstill part. When D is equal to or greater than d1, W is decided as 1, namely, to represent a moving part. When D is equal to or greater than d0 and equal to or less than d1, W has a value which is equal to or greater than 0 and equal to or less than 1. In summary, the main movement detecting circuit 21 of Fig. 1 detects the absolute value D of a one-frame difference signal to produce the main movement signal 53 in accordance with a mathematical function exemplified in Fig. 2. The image as a whole may either be the moving or the standstill "part".

In the above-described movement detecting device, the movement is detected by using the one-frame difference signal. Whereas, the extended definition television signal 51 may be subjected to interlaced scanning in the manner illustrated in Fig. 3. It is consequently necessary to use a difference signal between two consecutive frames at which phases are coincident. As a result, a defect has been unavoidable in this device such that a coincidence between an n-th field and an (n-2)-th field gives rise to a decision as a standstill part even when values are incoincident between an (n-1)-th field and in the n-th field. Moreover, another defect is liable to occur such that a moving part is misjudged as a standstill part due to noise and/or distortion.

Thus, the conventional movement detecting device is incapable of detecting the movement with a raised precision. It may be mentioned here that an adverse effect of the noise can be reduced by adding into a combined or a mixed signal a plurality of component signals on which noise, such as random noise, is superposed.

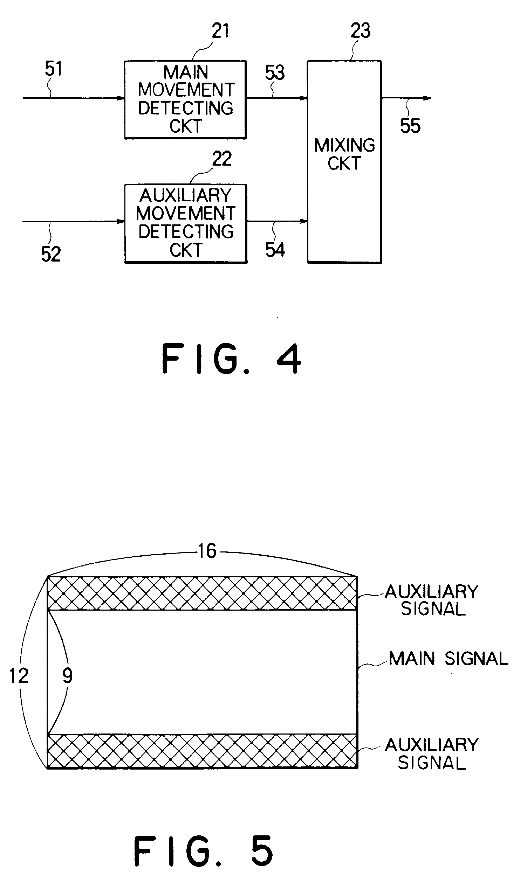

Reference is now made to Figs. 4 to 6. In an example being illustrated, it is presumed that a television receiver is for receiving an extended definition television (EDTV) signal of a PAL (phase alternation line) system and that the extended definition television signal is already decomposed into a main signal and an auxiliary signal. It is additionally assumed hereafter that the main signal consists of a luminance signal alone with its color or chrominance signal separated by a known art and that the auxiliary signal is transmitted in accordance with a transmission format exemplified in Fig. 5 separately of the main signal above and below the main signal, although transmission may be carried out with frequency multiplexing on the main signal in accordance with a conventional frequency multiplexing technique.

Fig. 5 shows a region of an aspect ratio of twelve in height and sixteen in width as an effective picture region of the television signal of the PAL system. A less high region of an aspect ratio of nine in height and sixteen in width is for transmission of the main signal. The auxiliary signal is transmitted in regions hatched in the figure. The auxiliary signal may have either a horizontal high frequency component or a vertical high frequency component of the luminance signal so that pictures are reproduced with an increased resolution.

Description will begin with a movement detecting device which device is illustrated in Fig. 4. Similar parts and similar signals are designated by like reference numerals. The movement detecting device is also for detecting a movement of a moving part of an image reproduced from an extended definition television signal of a PAL system and includes the main movement detecting circuit 21 for detecting the main movement of the moving part from the main signal 51 to produce the main movement signal 53 representative of the main movement, like the movement detecting device illustrated in Fig. 1.

The movement detecting device comprises an auxiliary movement detecting circuit 22 which detects an auxiliary movement of the moving part from the auxiliary signal 52 and produces an auxiliary movement signal 54 representative of the auxiliary movement. The auxiliary movement detecting circuit 22 may be similar in structure to the main movement detecting circuit 21 described in conjunction with Fig. 1. Decision circuits 14 may, however, be differently operable between the main and the auxiliary movement detecting circuits 21 and 22. For example, the main movement detecting circuit 21 has values d0 and d1 selected less than the values of d0 and dl used in the auxiliary movement detecting circuit 22 on carrying out decision described with reference to Fig. 2. This gives a sensitivity to movement detection in connection with the auxiliary signal 52 different from that of movement detection for the main signal 51.

Connected to the main and the auxiliary movement detecting circuits 21 and 22, a mixing circuit 23 mixes the main and the auxiliary movement signals 53 and 54 into a movement signal 55 representative of the movement. In structure, the mixing circuit 23 may produce a sum signal of the main and the auxiliary movement signals 53 and 54 as the movement signal 55. Alternatively, the sum signal of the signal 53 and the signal 54 may be transformed in accordance with a nonlinear function as by a limiter.

By the above-described structure, the movement signal 55 is produced by using the main movement signal 53 detected from the main signal 51 and the auxiliary movement signal 54 detected from the auxiliary signal 52. If the auxiliary movement signal 54 has a value greater than zero, the movement signal 55 is given a value greater than zero to decide the moving part even if the main movement signal 53 is equal to zero.

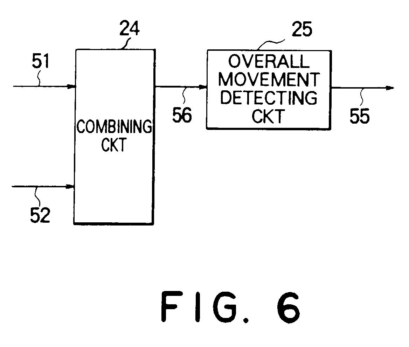

Description will next proceed to a movement detecting device which device is illustrated in Fig. 6. The movement detecting device comprises a combining circuit 24 which combines the main and the auxiliary signals 51 and 52 of the extended definition television signal into a combined signal 56. Connected to the combining circuit 24, an overall movement detecting circuit 25 detects an overall movement of the moving part from the combined signal as the movement and produces the movement signal 55 representative of the movement.

In the combining circuit 24, an inverse processing is carried out wherein inversed is decomposition carried out on a transmitter side into the main signal 51 and the auxiliary signal 52. When an original signal is sequentially or progressively scanned on the transmitter side, the combined signal 56 is a sequentially scanned signal. The overall movement detecting circuit 25 may have a structure which is basically similar to that of the main movement detecting circuit 21 described in connection with Fig. 1 except for a modification complying with the manner of scan of the combined signal 56 used as an input. More particularly, the memory circuit 11 should be a circuit for memorizing each one-frame portion of sequential or progressive scanning when the combined signal 56 is the sequentially scanned signal. The absolute value circuit 13 and the decision circuit 14 should be modified so as to be operable at a rate of the sequential scanning. Under the circumstances, the movement signal 55 is obtained in sequential scanning. Incidentally, it is of no problem to carry out subsampling in order to produce the movement signal 55 as an interlace scanned one. When the movement is detected in sequential scanning, it becomes possible to detect the movement by comparing, in Fig. 3, the signal in the (n-1)-th field with the signal in the n-th field.

By the above-described structure, the movement signal 55 is detected from the combined signal 56 of the main signal 51 and the auxiliary signal 52. In the manner described before, the auxiliary signal 52 serves to give a higher precision to detection of the movement when compared with detection from the main signal 21 alone.

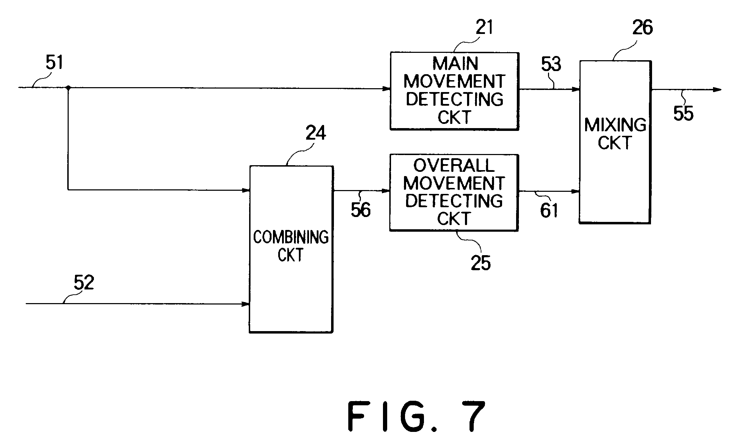

The description will now be directed to a movement detecting device according to an embodiment of this invention that is illustrated in Fig. 7. The movement detecting device comprises similar parts designated by like reference numerals. The overall movement detecting circuit 25 detects the overall movement of the moving part from the combined signal 56 of the combining circuit 24 and produces an overall movement signal 61 representative of the overall movement. Connected to the main and the overall movement detecting circuits 21 and 25, a mixing circuit 26 mixes the main and the overall movement signals 53 and 61 into an movement signal 55 representative of the movement.

More specifically, the main signal 51 is delivered to the main movement detecting circuit 21 which produces the main movement signal 53 in interlaced scanning with the main movement signal subsampled in the manner described before. The main signal 51 and the auxiliary signal 52 are delivered to the combining circuit 24 which produces the combined signal 56. Supplied with the combined signal 56, the overall movement detecting circuit 25 produces the overall movement signal 61. It is to be noted in this connection that the overall movement signal 61 should be produced with interlaced scanning by applying subsampling to the combined signal 56 which is produced in sequential scanning. In the manner described in relation to the movement detecting device of Fig. 4, the movement may be decided differently between the main and the overall movement detecting circuits 21 and 25 with the movement detected in connection with the combined signal 56 with a sensitivity different from that for detection of the movement from the main signal 51. The mixing circuit 26 is supplied with the main and the overall movement signal 53 and 61 to produce a sum signal of the both as the movement signal 55. Incidentally, the movement signal 55 may be produced with the sum signal subjected to nonlinear processing.

When the combined signal 56 is sequentially scanned, the overall movement signal 61 may be sequentially scanned. In this event, it is possible to use a structure for converting the main movement signal 53 into a sequentially scanned signal and for producing the movement signal 55 in sequential scanning.

With the above-described structure, the movement signal 55 is detected from the main and the auxiliary signals 51 and 52. If the overall movement signal 61 has a value greater than zero, the movement signal 55 is given a value greater than zero to enable decision of the moving part even if the main movement signal 53 is equal to zero.

It is possible in the combining circuit 24 to subject the main signal 51 to limitation of its signal band in compliance with a signal band of the auxiliary signal 52. More specifically, let the auxiliary signal 52 be the vertical high frequency component and its horizontal signal band be 1 MHz wide. In such an event, it is possible to reduce hardware without much deteriorating precision of detection of the movement by band-limiting the horizontal signal band of the main signal 51 to 1 MHz.

It is now appreciated that the movement is correctly detected by using an overall frequency band of the television signal. For example, a moving part may move before a standstill background. The movement signal would be detected by steep build up to represent the standstill part (background) at the edge when the overall frequency region is used, as by additionally using the auxiliary signal representative of a horizontal or a vertical higher-frequency component. Alternatively, the auxiliary signal may represent a time higher-frequency component as, for example, a field-difference signal derived from a television signal of the sequential scanning.

In the manner which has thus far been described, this invention makes it possible to detect an eventual movement with a raised precision. This is achieved by using both the main signal and the auxiliary signal.

## Claims

1. A movement detecting device for use in a television receiver in detecting a movement of a moving part of an image reproduced from an extended definition television (EDTV) signal comprising a main signal (51), said main signal comprising a luminance signal representative of successive pictures,
said device including a main movement detecting circuit (21) for detecting a main movement of said moving part from said main signal to produce a main movement signal (53) representative of said main movement, characterised by:
a combining circuit (24) for combining said main signal and an auxiliary signal (52) of said extended definition television signal into a combined signal (56), said auxiliary signal comprising a high frequency component of said luminance signal so that said pictures are reproduced with an increased resolution;
an overall movement detecting circuit (25) for detecting an overall movement of said moving part from said combined signal to produce an overall movement signal (61) representative of said overall movement; and
a mixing circuit (26) for mixing said main movement and said overall movement signals into a movement signal (55) representative of said movement.

## Patentansprüche

1. Bewegungsdetektionsvorrichtung zur Anwendung in einem Fernsehempfänger zum Detektieren einer Bewegung eines sich bewegenden Teils eines Bildes, das aus einem Hochauflösungs-Fernseh-(EDTV)-Signal reproduziert wird, das ein Hauptsignal (51) aufweist, wobei: das Hauptsignal ein aufeinanderfolgende Vollbilder repräsentierendes Luminanzsignal aufweist,
die Vorrichtung eine Hauptbewegungsdetektionsschaltung (21) zum Detektieren einer Hauptbewegung des sich bewegenden Teils aus dem Hauptsignal aufweist, um ein die Hauptbewegung repräsentierendes Hauptbewegungssignal (53) zu erzeugen, gekennzeichnet durch:
eine Kombinationsschaltung (24) zum Kombinieren des Hauptsignals und eines Hilfssignals (52) des Hochauflösungs-Fernsehsignals in ein kombiniertes Signal (56), wobei das Hilfssignal eine Hochfrequenzkomponente des Luminanzsignals aufweist, so daß die Vollbilder mit einer erhöhten Auflösung dargestellt werden;
eine Gesamtbewegungsdetektionsschaltung (25) zum Detektieren einer Gesamtbewegung des sich bewegenden Teils aus dem kombinierten Signal, um ein die Gesamtbewegung repräsentierendes Gesamtbewegungssignal (61) zu erzeugen; und
eine Mischschaltung (26) zum Mischen des Hauptbewegungs- und Gesamtbewegungssignals in ein die Bewegung repräsentierendes Bewegungssignal (55).

## Revendications

1. Dispositif de détection de mouvement destiné à une utilisation dans un récepteur de télévision pour détecter un mouvement d'une partie mobile d'une image reproduite à partir d'un signal de télévision à définition étendue (TVDE) comprenant un signal principal (51), ledit signal principal comprenant un signal de luminance représentatif des images successives,
ledit dispositif comportant un circuit de détection de mouvement principal (21) pour détecter un mouvement principal de ladite partie mobile à partir dudit signal principal pour produire un signal de mouvement principal (53) représentatif dudit mouvement principal, caractérisé par :
un circuit de combinaison (24) pour combiner ledit signal principal et un signal auxiliaire (52) dudit signal de télévision à définition étendue en un signal mélangé (56), ledit signal auxiliaire comprenant une composante à haute fréquence dudit signal de luminance de sorte que lesdites images sont reproduites avec une résolution augmentée ;
un circuit de détection de mouvement global (25) pour détecter un mouvement global de ladite partie mobile à partir dudit signal combiné pour produire un signal de mouvement global (61) représentatif dudit mouvement global ; et
un circuit mélangeur (26) pour mélanger lesdits signaux de mouvement principal et lesdits signaux de mouvement global en un signal de mouvement (55) représentatif dudit mouvement.
